# DEMANDE DE BREVET EUROPEEN

(11) **EP 4 439 526 A1**
(43) Date de publication de la demande: **02.10.2024**
(21) Numéro de dépôt: 24165798.0
(22) Date de dépôt: 25.03.2024
(51) Int. Cl.: G08G 5/00, G01S 13/95, G01S 7/295

(54) **PROCEDE ET SYSTEME DE GENERATION ET DE FOURNITURE DE DESCRIPTEURS D'OBSTACLES METEOROLOGIQUES**

(30) Priorité: 28.03.2023 FR 2302918
(71) Demandeur: Airbus Operations (S.A.S.), 31060 Toulouse Cedex 9 (FR)
(72) Inventeur: BERTHIER, Jean-Baptiste, 31060 TOULOUSE (FR); MOLINIER, Thibault, 31700 BLAGNAC (FR)
(74) Mandataire: Cabinet Le Guen Maillet

(57) **Abrégé**

Un serveur de données météorologiques dans un aéronef : traite (402) des données géoréférencées d'obstacles météorologiques afin de réaliser une discrimination de sévérité météorologique des obstacles météorologiques et obtenir des images en deux dimensions des obstacles météorologiques qui sont séparées par niveau de sévérité météorologique ; effectue une polygonisation (404) par simplification de contour des obstacles météorologiques des images en deux dimensions, pour chaque niveau de sévérité météorologique, afin d'obtenir des polygones représentatifs des obstacles météorologiques ; fournit (405) des descripteurs d'obstacles météorologiques à un système de gestion de vol de l'aéronef, les descripteurs décrivant les polygones avec géoréférencement ; réceptionne au moins un paramètre de besoin représentatif d'un besoin du système de gestion de vol; et configure la polygonisation et/ou le traitement des données en fonction dudit besoin. Ainsi, les ressources calculatoires du système de gestion de vol sont réduites pour effectuer des calculs de trajectoires de contournement des obstacles météorologiques et calcule et sélectionne des trajectoires adaptées à ses besoins.

## Description

### DOMAINE TECHNIQUE

La présente invention concerne un procédé de génération et de fourniture de descripteurs d'obstacles météorologiques afin de permettre des calculs automatiques de trajectoires d'aéronefs. La présente invention concerne notamment un serveur de données météorologiques configuré pour fournir à un système de gestion de vol d'un aéronef de tels descripteurs d'obstacles météorologiques.

### ETAT DE LA TECHNIQUE ANTERIEURE

Lorsqu'un aéronef est en vol, il peut être souhaitable de fournir une assistance pour déterminer de manière automatique une trajectoire qui permette d'éviter des obstacles météorologiques. Cela évite au pilote de l'aéronef de devoir déterminer par lui-même des trajectoires d'évitement de ces obstacles météorologiques (nuages d'orage...).

Or, les données météorologiques sont typiquement issues de radars météorologiques et potentiellement d'autres capteurs embarqués dans les aéronefs, et sont des données complexes à manipuler du fait de leur grande précision (forme des nuages...).

Il est souhaitable de fournir une solution permettant de fournir une assistance pour déterminer de manière automatique une trajectoire qui permette d'éviter des obstacles météorologiques, tout en limitant les ressources calculatoires nécessaires pour ce faire.

### EXPOSE DE L'INVENTION

Il est alors proposé ici un procédé de fourniture de descripteurs d'obstacles météorologiques par un serveur de données météorologiques, le serveur de données météorologiques étant embarqué dans un aéronef, le serveur de données météorologiques comportant de la circuiterie électronique implémentant les étapes suivantes :
- obtention de données géoréférencées des obstacles météorologiques ;
- traitement des données géoréférencées des obstacles météorologiques afin de réaliser une discrimination de sévérité météorologique des obstacles météorologiques et obtenir des images en deux dimensions des obstacles météorologiques qui sont séparées par niveau de sévérité météorologique ;
- polygonisation par simplification de contour des obstacles météorologiques des images en deux dimensions, pour chaque niveau de sévérité météorologique, afin d'obtenir des polygones représentatifs des obstacles météorologiques, et géoréférencement des polygones obtenus ; et
- fourniture des descripteurs d'obstacles météorologiques à un système de gestion de vol de l'aéronef, les descripteurs décrivant les polygones obtenus avec leur géoréférencement.

Le procédé comporte en outre les étapes suivantes :
- réception d'au moins un paramètre de besoin transmis par le système de gestion de vol, ledit au moins un paramètre de besoin étant représentatif d'un besoin du système de gestion de vol ; et
- configuration de ladite polygonisation et/ou dudit traitement des données en fonction dudit au moins un paramètre de besoin.

Ainsi, les ressources calculatoires du système de gestion de vol sont réduites pour effectuer des calculs de trajectoires de contournement des obstacles météorologiques. En outre, il est possible pour le système de gestion de vol de calculer et sélectionner des trajectoires de contournement adaptées à ses besoins.

Selon un mode de réalisation particulier, les données géoréférencées des obstacles météorologiques sont traitées indépendamment en 2 dimensions par couche d'altitude, et le procédé comporte en outre l'étape suivante :
- reconstitution en 3 dimensions des obstacles météorologiques mis sous forme de polygones par couche d'altitude.

Selon un mode de réalisation particulier, le procédé comporte en outre l'étape suivante :
- application de filtres morphologiques sur les images séparées par niveau de sévérité météorologique, les filtres morphologiques étant une combinaison d'une opération de dilatation suivie d'une opération d'érosion.

Selon un mode de réalisation particulier, le procédé comporte en outre l'étape suivante :
- adaptation d'un ratio d'un taux de dilatation représentatif de l'opération de dilatation et d'un taux d'érosion représentatif de l'opération d'érosion, en fonction dudit au moins un paramètre de besoin.

Selon un mode de réalisation particulier, l'adaptation du ratio du taux de dilatation et du taux d'érosion correspond à au moins l'une parmi :
- une augmentation par rapport à une valeur par défaut dudit ratio lorsque ledit au moins un paramètre de besoin est représentatif d'un besoin du système de gestion de vol correspondant à un besoin de sécurité d'un vol du l'aéronef ou à un besoin de confort des passagers de l'aéronef,
- une diminution par rapport à une valeur par défaut dudit ratio lorsque ledit au moins un paramètre de besoin est représentatif d'un besoin du système de gestion de vol correspondant à un besoin de diminution d'un temps de trajet.

Selon un mode de réalisation particulier, le procédé comporte en outre l'étape suivante :
- application d'un autre filtre visant à supprimer, par niveau de sévérité météorologique, les obstacles météorologiques ayant une surface inférieure à un seuil de surface prédéterminé.

Selon un mode de réalisation particulier, le procédé comporte en outre l'étape suivante :
- adaptation d'une valeur du seuil de surface en fonction dudit au moins un paramètre de besoin.

Selon un mode de réalisation, l'adaptation de ladite valeur du seuil de surface correspond à une augmentation par rapport à une valeur par défaut dudit seuil de surface lorsque ledit au moins un paramètre de besoin est représentatif d'un besoin du système de gestion de vol correspondant à une capacité en ressources et/ou en mémoire du système de gestion de vol ou à la diminution du temps de trajet.

Selon un mode de réalisation particulier, au moins un niveau de sévérité météorologique correspond à un impact relatif à la sécurité de l'aéronef, et/ou au moins un niveau de sévérité météorologique correspond à un impact relatif aux performances de l'aéronef.

Selon un mode de réalisation particulier, la polygonisation est réalisée en utilisant une distance maximale dépendante d'un paramètre de calibrage correspondant à un desdits au moins un paramètre de besoin.

Selon un mode de réalisation, le procédé comporte en outre l'étape suivante :
- augmentation par rapport à une valeur par défaut de ladite distance maximale, lorsque ledit au moins un paramètre de besoin est représentatif d'un besoin du système de gestion de vol correspondant à la capacité en ressource de calcul et/ou de mémoire du système de gestion de vol,
- diminution par rapport à une valeur par défaut de ladite distance maximale, lorsque ledit au moins un paramètre de besoin est représentatif d'un besoin du système de gestion de vol correspondant à la diminution du temps de trajet ou à une réduction d'une consommation de carburant et d'un impact environnemental.

Selon un mode de réalisation particulier, le procédé comporte en outre l'étape suivante :
- fourniture des descripteurs d'obstacles météorologiques à un afficheur de l'aéronef.

Il est aussi proposé un serveur de données météorologiques destiné à être embarqué dans un aéronef, le serveur de données météorologiques comportant de la circuiterie électronique configurée pour implémenter les étapes suivantes :
- obtention de données géoréférencées des obstacles météorologiques ;
- traitement des données géoréférencées des obstacles météorologiques afin de réaliser une discrimination de sévérité météorologique des obstacles météorologiques et obtenir des images en deux dimensions des obstacles météorologiques qui sont séparées par niveau de sévérité météorologique ;
- polygonisation par simplification de contour des obstacles météorologiques des images en deux dimensions, pour chaque niveau de sévérité météorologique, afin d'obtenir des polygones représentatifs des obstacles météorologiques, et géoréférencement des polygones obtenus ; et
- fourniture de descripteurs d'obstacles météorologiques, les descripteurs décrivant les polygones obtenus avec leur géoréférencement.

La circuiterie électronique est en outre configurée pour implémenter les étapes suivantes :
- réception d'au moins un paramètre de besoin transmis par le système de gestion de vol, ledit au moins un paramètre de besoin étant représentatif d'un besoin du système de gestion de vol ; et
- configuration de ladite polygonisation et/ou dudit traitement des données en fonction dudit au moins un paramètre de besoin.

Il est aussi proposé un aéronef comportant un système de gestion de vol et le serveur de données météorologiques susmentionné, qui est configuré pour fournir les descripteurs d'obstacles météorologiques au système de gestion de vol, de sorte que le système de gestion de vol est apte à calculer des trajectoires d'évitement des obstacles météorologiques grâce auxdits descripteurs d'obstacles météorologiques.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre schématiquement, en vue de côté, un aéronef ;
[Fig. 2] illustre schématiquement une avionique comportant un serveur de données météorologiques ;
[Fig. 3] illustre schématiquement un agencement de plateforme matérielle adaptée pour implémenter le serveur de données météorologiques ;
[Fig. 4A] illustre schématiquement un algorithme de fourniture des obstacles météorologiques sous forme de polygones, dans un premier mode de réalisation ;
[Fig. 4B] illustre schématiquement un algorithme de fourniture des obstacles météorologiques sous forme de polygones, dans un deuxième mode de réalisation ;
[Fig. 5] représente une image d'obstacles météorologiques avec trois niveaux de sévérité météorologique ;
[Fig. 6A] représente une extraction de la Fig. 5 fournissant une vue d'obstacles météorologiques avec un niveau de sévérité faible ;
[Fig. 6B] représente une extraction de la Fig. 5 fournissant une vue d'obstacles météorologiques avec un niveau de sévérité intermédiaire ;
[Fig. 6C] représente une extraction de la Fig. 5 fournissant une vue d'obstacles météorologiques avec un niveau de sévérité fort ;
[Fig. 7] représente un résultat d'application de filtres morphologiques sur les obstacles météorologiques de la Fig. 6B ;
[Fig. 8] représente un résultat de détection de contours sur les obstacles météorologiques de la Fig. 7 ;
[Fig. 9] représente un résultat d'application d'un autre filtre sur les obstacles météorologiques de la Fig. 8 ;
[Fig. 10] représente un résultat de polygonisation sur les obstacles météorologiques de la Fig. 9 ;
[Fig. 11A] illustre schématiquement, en vue en coupe horizontale, un obstacle météorologique représenté sous forme de polygones associés à différents niveaux de sévérité météorologique ; et
[Fig. 11B] illustre schématiquement, en vue en coupe verticale, un obstacle météorologique représenté sous forme de polygones associés à différents niveaux de sévérité météorologique.

### EXPOSE DETAILLE DE MODES DE REALISATION

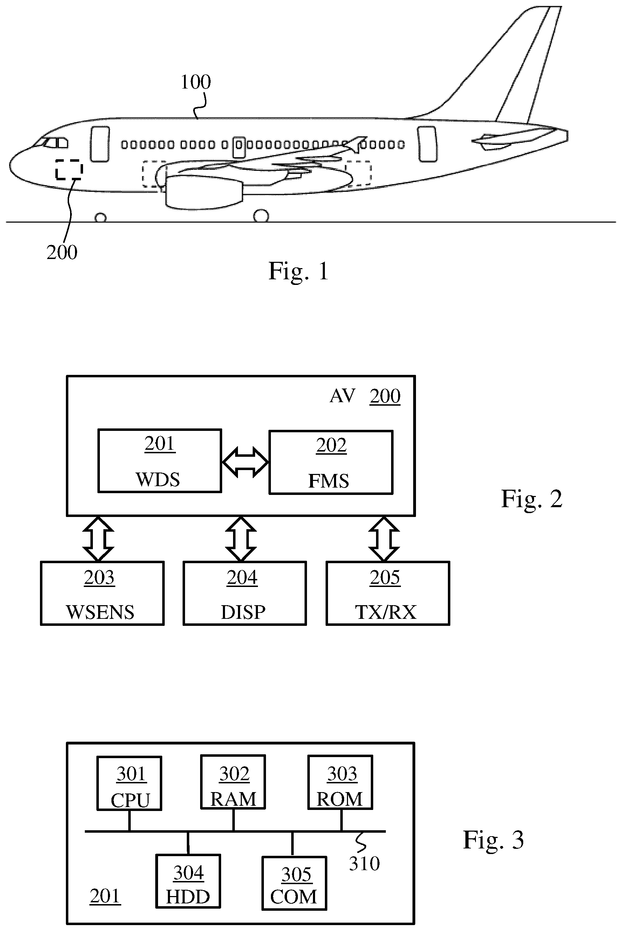

La Fig. 1 illustre schématiquement, en vue de côté, un aéronef 100 équipé d'une avionique 200. L'avionique 200 comporte un système de gestion de vol FMS (« Flight Management System » en anglais) 202 configuré pour effectuer des calculs de trajectoires.

Pour effectuer les calculs de trajectoires, le système de gestion de vol FMS 202 reçoit en entrée des descripteurs d'obstacles météorologiques (nuages d'orage...) à prendre en compte dans les calculs de trajectoires de l'aéronef 100. Ces descripteurs d'obstacles météorologiques sont fournis au système de gestion de vol FMS 202 par un serveur de données météorologiques WDS (« Weather Data System » en anglais) 201. Le serveur de données météorologiques WDS 201 fournit préférentiellement ces descripteurs d'obstacles météorologiques au système de gestion de vol FMS 202, et éventuellement à un afficheur DISP 204 du cockpit de l'aéronef 100, selon une période (ou fréquence) de rafraichissement prédéfinie (par exemple, toutes les minutes).

Le serveur de données météorologiques WDS 201 comporte un espace de stockage permettant de constituer une base de données dans laquelle les descripteurs d'obstacles et toute information utile pour générer lesdits descripteurs d'obstacles sont enregistrés.

Comme détaillé ci-après, les descripteurs d'obstacles météorologiques fournis par le serveur de données météorologiques WDS 201 sont des informations géoréférencées sous forme de polygones, préférentiellement par tranches d'altitude.

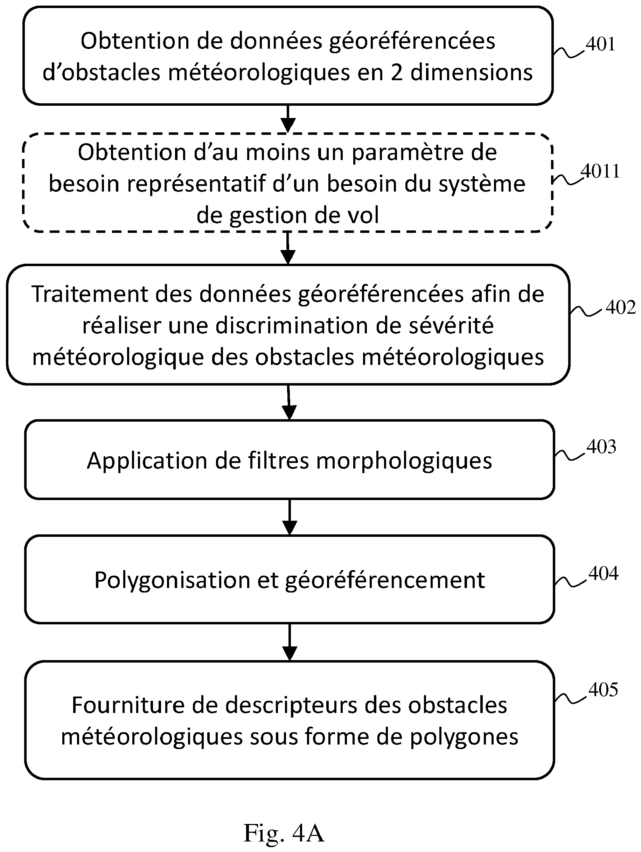

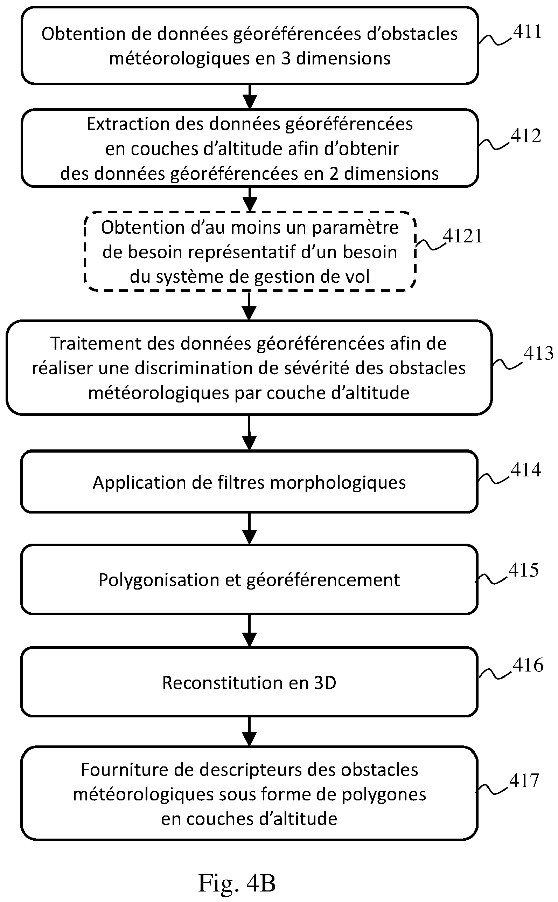

La base de données du serveur de données météorologiques WDS 201 est mise à jour grâce à des données météorologiques. Ces données météorologiques sont en 2 dimensions (2D) spatiales (latitude, longitude), auquel cas l'algorithme de la Fig. 4A est implémenté par le serveur de données météorologiques WDS 201 pour générer les descripteurs d'obstacles météorologiques, ou en 3 dimensions (3D) spatiales (latitude, longitude, altitude), auquel cas l'algorithme de la Fig. 4B est implémenté par le serveur de données météorologiques WDS 201 pour générer les descripteurs d'obstacles météorologiques.

Les données météorologiques sont par exemple des données de réflectivité, et éventuellement des données Doppler (vélocité), issues d'échos d'un radar météorologique embarqué dans l'aéronef 100, typique7ment à partir d'une carte de réflectivité et éventuellement de données Doppler. Des données issues d'autres capteurs de l'aéronef 100 peuvent être utilisées comme données météorologiques.

Le serveur de données météorologiques WDS 201 obtient préférentiellement ces données météorologiques selon une période (ou fréquence) de rafraichissement prédéfinie (par exemple, toutes les 30 secondes).

La base de données du serveur de données météorologiques WDS 201 peut être mise à jour avec des données météorologiques complémentaires, par exemple des descripteurs d'obstacles météorologiques sous forme de polygones géoréférencés, qui ont été obtenus (e.g., générés) au sol et transmis au serveur de données météorologiques WDS 201 avant le vol ou pendant le vol.

Par exemple, avant le décollage, la base de données peut être mise à jour grâce à une sacoche de vol électronique EFB (« Electronic Flight Bag » en anglais). Selon un autre exemple, une mise à jour des bases de données est réalisée grâce à des communications air - sol AGC (« Air - Ground Communications » en anglais), par exemple auprès d'un centre informatique d'une compagnie aérienne. Ces deux approches peuvent être combinées, avec un pré-chargement dans la base de données avant le décollage et une ou plusieurs mises à jour en vol, par exemple pour prendre en compte des évolutions de conditions météorologiques en temps-réel.

S'il devait y avoir contradiction de données météorologiques, les données météorologiques obtenues à partir de mesures effectuées grâce à des équipements embarqués dans l'aéronef 100 prévaudraient sur lesdits données météorologiques complémentaires.

Un agencement permettant au serveur de données météorologiques WDS 201 d'obtenir des données météorologiques afin de générer des descripteurs d'obstacles météorologiques représentatifs des conditions météorologiques auquel l'aéronef 100 doit faire face en vol est schématiquement illustré sur la Fig. 2.

Sur la Fig. 2, l'avionique 200 comporte, entre autres équipements, le serveur de données météorologiques WDS 201 et le système de gestion de vol FMS 202. L'avionique 200 est configurée de sorte que le serveur de données météorologiques WDS 201 fournisse au système de gestion de vol FMS 202 des descripteurs d'obstacles météorologiques sous forme de polygones avec géoréférencement. Grâce à ces polygones, le système de gestion de vol FMS 202 est apte à calculer des trajectoires d'évitement des obstacles météorologiques en limitant les ressources calculatoires nécessaires pour ce faire. En effet, il est plus simple d'effectuer des calculs de trajectoires par contournement de sommets de polygones que d'effectuer des calculs de trajectoires directement à partir d'images résultant d'échos d'un radar météorologique ou d'autres capteurs de l'aéronef 100.

Pour obtenir les données météorologiques servant à constituer les polygones à fournir au système de gestion de vol FMS 202, le serveur de données météorologiques WDS 201 interagit avec des capteurs météorologiques WSENS 203 (radar météorologique et éventuellement d'autres capteurs) de l'aéronef 100.

Pour obtenir les données météorologiques complémentaires, le serveur de données météorologiques WDS 201 peut interagir avec un transmetteur-récepteur TX/RX 205, implémentant par exemple des communications air - sol AGC.

En plus de fournir des polygones représentatifs d'obstacles météorologiques au système de gestion de vol FMS 202, le serveur de données météorologiques WDS 201 peut fournir des polygones représentatifs d'obstacles météorologiques à l'afficheur DISP 204. Les polygones fournis par le serveur de données météorologiques WDS 201 à l'afficheur DISP 204 peuvent différer des polygones fournis par le serveur de données météorologiques WDS 201 au système de gestion de vol FMS 202, du fait que les polygones peuvent avoir été générés avec des paramètres de polygonisation distincts pour le système de gestion de vol FMS 202 et l'afficheur DISP 204.

Chaque polygone est défini par ses arêtes (« edges » en anglais) et est préférentiellement associé à une tranche d'altitude définie par une altitude plancher et une altitude plafond. Par conséquent, chaque descripteur d'obstacle météorologique correspond à un descripteur de polygone comportant lui-même des descripteurs d'arêtes incluant les informations suivantes :
- Longitude et latitude d'un sommet de l'arête,
- Longitude et latitude de l'autre sommet de l'arête,
- Identifiant d'arête au sein du polygone, et
- Préférentiellement, identifiant de polygone auquel appartient l'arête.

Chaque descripteur de polygone peut ainsi être constitué de descripteurs d'arêtes chaînés, préférentiellement présentés, de manière ordonnée, selon le sens horaire ou dans le sens antihoraire de parcours de la périphérie du polygone en question.

Chaque descripteur de polygone comporte en outre les informations suivantes :
- Horodatage,
- Identifiant de polygone,
- Altitude plancher de la couche,
- Altitude plafond de la couche, et
- Niveau de sévérité météorologique.

Chaque descripteur de polygone peut comporter en outre les informations suivantes :
- Niveau de confiance dans les données météorologiques utilisées pour constituer le polygone, des données météorologiques issues d'un radar météorologique embarqué étant par exemple considérées plus fiables que des données météorologiques fournies par un centre informatique d'une compagnie aérienne,
- Vitesse horizontale de l'obstacle, avec direction de déplacement,
- Facteur de croissance horizontale,
- Facteur de croissance verticale,
- Altitude plancher de l'obstacle météorologique, et
- Altitude plafond de l'obstacle météorologique.

Grâce à des traitements appliqués par le serveur de données météorologiques WDS 201 sur les données météorologiques obtenues, les obstacles météorologiques sont chacun représentés par un ou plusieurs polygones (par couche d'altitude concernée) d'un ou plusieurs niveaux respectifs de sévérité météorologique.

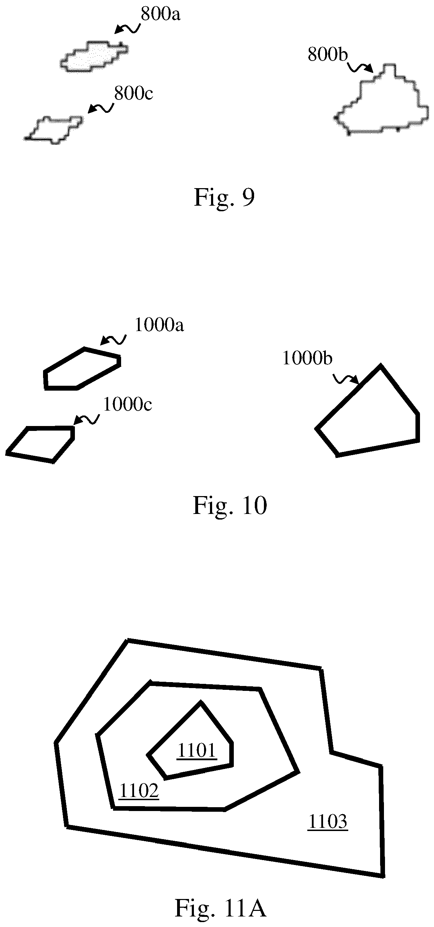

Par exemple, comme schématiquement illustré sur la Fig. 11A (vue de dessus de l'obstacle météorologique en 2 dimensions (2D), ou coupe horizontale de l'obstacle météorologique en 3 dimensions (3D)), un premier polygone 1103 de niveau faible de sévérité météorologique inclut un deuxième polygone 1102 de niveau intermédiaire de sévérité météorologique (donc de surface plus restreinte) qui lui-même inclut un troisième polygone 1101 de niveau fort de sévérité météorologique (donc de surface encore plus restreinte).

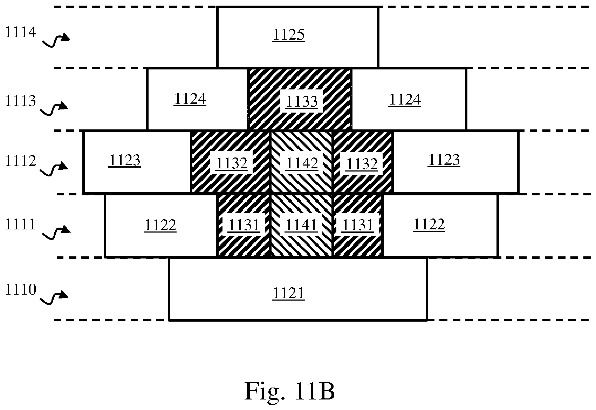

En considérant plusieurs couches d'altitude sur lesquelles s'étend l'obstacle météorologique, comme schématiquement illustré sur la Fig. 11B (coupe verticale de l'obstacle météorologique en 3 dimensions (3D)), différents niveaux de sévérité météorologique peuvent apparaître au sein d'une même couche d'altitude (comme sur la Fig. 11A) et d'une couche d'altitude à une autre. La Fig. 11B présente un obstacle météorologique sur une succession de couches d'altitudes, numérotées de 1110 à 1114 dans un ordre croissant d'altitude. Les couches d'altitudes 1110 à 1114 sont de même épaisseur (prédéterminée), mais peuvent en variante être d'épaisseurs différentes. La couche d'altitude 1110 présente un premier polygone 1121 de niveau faible de sévérité météorologique. La couche d'altitude 1111 présente un deuxième polygone 1122 de niveau faible de sévérité météorologique qui inclut un troisième polygone 1131 de niveau intermédiaire de sévérité météorologique, qui lui-même inclut un quatrième polygone 1141 de niveau fort de sévérité météorologique. La couche d'altitude 1112 présente un cinquième polygone 1123 de niveau faible de sévérité météorologique qui inclut un sixième polygone 1132 de niveau intermédiaire de sévérité météorologique, qui lui-même inclut un septième polygone 1142 de niveau fort de sévérité météorologique. La couche d'altitude 1113 présente un huitième polygone 1124 de niveau faible de sévérité météorologique qui inclut un neuvième polygone 1133 de niveau intermédiaire de sévérité météorologique. Et enfin, la couche d'altitude 1114 présente un dixième polygone 1125 de niveau faible de sévérité météorologique.

Fournir une indication de niveau de sévérité météorologique permet au système de gestion de vol FMS 202 de calculer et sélectionner des trajectoires candidates pour l'aéronef 100 en tenant compte des circonstances de vol. Par exemple, lorsqu'à une altitude de vol courante aucun autre obstacle n'est présent et que l'obstacle météorologique peut être contourné sans déviation de trajectoire excessive, le calcul de trajectoire peut viser à intégralement contourner l'obstacle météorologique ; lorsqu'à une altitude de vol courante aucun autre obstacle n'est présent et que l'obstacle météorologique ne peut pas être contourné sans déviation de trajectoire excessive, le calcul de trajectoire peut viser à éviter la partie de niveau intermédiaire de sévérité météorologique de l'obstacle météorologique tout en autorisant de pénétrer dans la partie de niveau faible de sévérité météorologique de l'obstacle météorologique ; et lorsqu'à l'altitude de vol courante un obstacle de relief est présent dans l'environnement, le calcul de trajectoire peut viser à uniquement assurer une marge de sécurité entre l'aéronef 100 et, d'une part, la partie de niveau fort de sévérité météorologique de l'obstacle météorologique et d'autre part, l'obstacle de relief.

Un exemple de plateforme matérielle adaptée pour implémenter le serveur de données météorologiques WDS 201 est détaillé ci-après en relation avec la Fig. 3. D'autres équipements de l'avionique 200, tels que le système de gestion de vol FMS 202, peuvent reposer sur une telle plateforme matérielle.

La Fig. 3 illustre schématiquement un exemple d'architecture matérielle du serveur de données météorologiques WDS 201, qui comprend alors, reliés par un bus de communication 310 : un processeur ou CPU (« Central Processing Unit » en anglais) 301 ; une mémoire vive RAM (« Random Access Memory » en anglais) 302 ; une mémoire morte ROM (« Read Only Memory » en anglais) 303, par exemple une mémoire Flash ; un dispositif de stockage de données, tel qu'un disque dur HDD (« Hard Disk Drive » en anglais), ou un lecteur de support de stockage, tel qu'un lecteur de cartes SD (« Secure Digital » en anglais) 304 ; au moins une interface de communication 305 permettant au serveur de données météorologiques WDS 201 d'interagir avec d'autres équipements électroniques de l'aéronef 100, tels que des équipements de l'avionique 200 (comme schématiquement illustré sur la Fig. 2).

Le processeur 301 est capable d'exécuter des instructions chargées dans la RAM 302 à partir de la ROM 303, d'une mémoire externe (non représentée), d'un support de stockage, tel qu'une carte SD, ou d'un réseau de communication (non représenté). Lorsque le serveur de données météorologiques WDS 201est mis sous tension, le processeur 301 est capable de lire de la RAM 302 des instructions et de les exécuter. Ces instructions forment un programme d'ordinateur causant une implémentation, par le processeur 301, des comportements, étapes et algorithmes décrits ici.

Tout ou partie des comportements, étapes et algorithmes décrits ici peut ainsi être implémenté sous forme logicielle par exécution d'un ensemble d'instructions par une machine programmable, telle qu'un DSP (« Digital Signal Processor » en anglais) ou un microcontrôleur, ou être implémenté sous forme matérielle par une machine ou un composant (« chip » en anglais) dédié ou un ensemble de composants (« chipset » en anglais) dédié, tel qu'un FPGA (« Field-Programmable Gate Array » en anglais) ou un ASIC (« Application-Specific Integrated Circuit » en anglais). D'une manière générale, le serveur de données météorologiques WDS 201, comme d'autres équipements de l'avionique 200 (tels que le système de gestion de vol FMS 202), comprend de la circuiterie électronique agencée et configurée pour implémenter les comportements, étapes et algorithmes décrits ici.

Fig. 4A illustre schématiquement un algorithme de fourniture des obstacles météorologiques sous forme de polygones géoréférencés, dans un premier mode de réalisation. Dans ce premier mode de réalisation, les polygones sont générés à partir de données météorologiques en 2 dimensions (2D) spatiales. Par exemple, ces données météorologiques correspondent à des obstacles météorologiques à la même altitude que l'altitude courante de l'aéronef 100, dans un périmètre prédéterminé dans les environs de l'aéronef 100.

Dans une étape 401, le serveur de données météorologiques WDS 201 obtient des données géoréférencées d'obstacles météorologiques en 2 dimensions (2D) spatiales. Par exemple, le serveur de données météorologiques WDS 201 obtient des données géoréférencées d'obstacles météorologiques résultant d'échos d'un radar météorologique embarqué dans l'aéronef 100 et éventuellement d'autres capteurs de l'aéronef 100. Par exemple, ces données géoréférencées prennent une forme d'une ou plusieurs matrices à 2 dimensions spatiales, où chaque point indique une valeur de réflectivité et éventuellement une valeur de vélocité Doppler.

Dans une étape 402, le serveur de données météorologiques WDS 201 applique un traitement sur les données météorologiques obtenues, afin de réaliser une discrimination de sévérité météorologique des obstacles météorologiques et obtenir des images en deux dimensions (vue de dessus) des obstacles météorologiques qui sont séparées par niveau de sévérité météorologique.

Au moins deux niveaux de sévérité météorologique sont définis. Préférentiellement, au moins trois niveaux de sévérité météorologique sont définis. Dans un mode de réalisation particulier, trois niveaux de sévérité météorologique sont définis : faible, intermédiaire, fort. Ainsi, par exemple, le niveau de sévérité météorologique faible est défini pour une valeur de réflectivité comprise entre 20 dBz et 30 dBz, le niveau de sévérité météorologique intermédiaire est défini pour une valeur de réflectivité comprise entre 30 dBz et 40 dBz, et le niveau de sévérité météorologique fort est défini pour une valeur de réflectivité au-delà de 40 dBz.

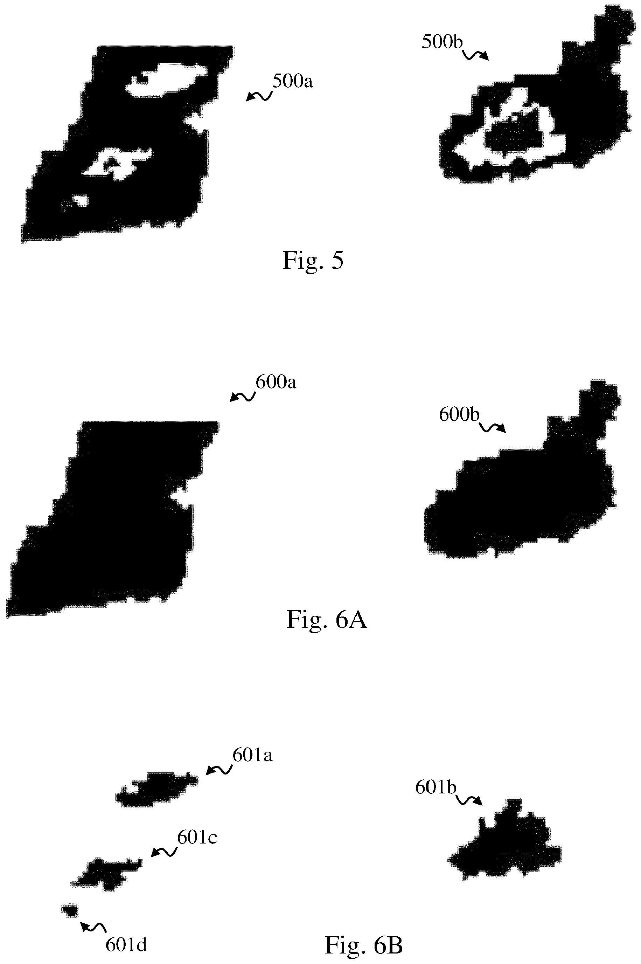

Si tous les niveaux de sévérité météorologique des obstacles météorologiques étaient représentés sur une même image à 2 dimensions (2D), une image comme sur la Fig. 5 serait obtenue. Sur la Fig. 5, deux obstacles météorologiques 500a et 500b sont représentés, avec trois niveaux de sévérité météorologique. Les obstacles 500a et 500b présentent respectivement des zones noires extérieures correspondant au niveau de sévérité météorologique faible, des zones blanches intérieures (dans les zones noires extérieures) correspondant au niveau de sévérité météorologique intermédiaire, et des zones noires intérieures (dans les zones blanches intérieures) correspondant au niveau de sévérité météorologique fort.

Dans un mode de réalisation particulier, parmi les au moins trois niveaux de sévérité météorologique définis, au moins un niveau de sévérité météorologique correspond à un niveau d'impact sur la sécurité de l'aéronef 100. Il est ainsi possible pour le système de gestion de vol FMS 202 de calculer et de sélectionner des trajectoires candidates pour l'aéronef 100 en tenant compte dudit niveau d'impact sur la sécurité de l'aéronef 100. Ainsi, par exemple, chaque niveau de sévérité correspond à une valeur représentative d'un impact respectif sur la sécurité de l'aéronef 100 (par exemple, un niveau de contraintes mécaniques subi par l'aéronef 100), et le système de gestion de vol FMS 202 définit des trajectoires candidates qui contournent les obstacles météorologiques ayant un niveau de sévérité météorologique supérieur ou égal à un niveau d'impact sur la sécurité de l'aéronef 100 prédéfini.

Alternativement ou additionnellement, au moins un niveau de sévérité météorologique correspond à un impact sur les performances de l'aéronef 100 en termes d'aérodynamisme et/ou d'impact environnemental (i.e., consommation de carburant etc.). Il est ainsi possible pour le système de gestion de vol FMS 202 de calculer et de sélectionner des trajectoires candidates pour l'aéronef 100 en tenant compte de l'impact des obstacles météorologiques sur les performances de l'aéronef 100. Ainsi, par exemple, chaque niveau de sévérité correspond à une valeur représentative d'un impact respectif sur les performances de l'aéronef 100 (par exemple, un niveau de consommations subi par l'aéronef 100), et le système de gestion de vol FMS 202 définit des trajectoires candidates qui contournent les obstacles météorologiques ayant un niveau de sévérité météorologique supérieur ou égal à un niveau d'impact sur les performances de l'aéronef 100 prédéfini.

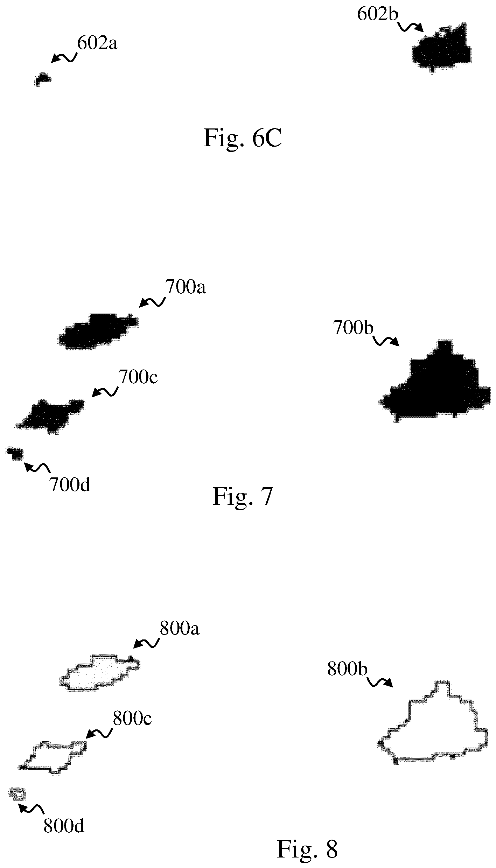

Dans l'étape 402, le serveur de données météorologiques WDS 201 traite de manière séparée les données météorologiques selon leur niveau de sévérité météorologique (images séparées). Ainsi, à partir de l'illustration de la Fig. 5, le serveur de données météorologiques WDS 201 obtient une première image séparée comme illustré sur la Fig. 6A correspondant au niveau de sévérité météorologique faible, une deuxième image séparée comme illustré sur la Fig. 6B correspondant au niveau de sévérité météorologique intermédiaire, et une troisième image séparée comme illustré sur la Fig. 6C correspondant au niveau de sévérité météorologique fort. Dit autrement, la Fig. 6A représente une extraction de la Fig. 5 fournissant une image des données météorologiques ayant un niveau de sévérité météorologique faible, la Fig. 6B représente une extraction de la Fig. 5 fournissant une image des données météorologiques ayant un niveau de sévérité météorologique intermédiaire, et la Fig. 6C représente une extraction de la Fig. 5 fournissant une image des données météorologiques ayant un niveau de sévérité météorologique fort.

Ainsi, la Fig. 6A montre des obstacles météorologiques 600a et 600b qui correspondent au niveau de sévérité météorologique faible extrait des données météorologiques ; la Fig. 6B montre des obstacles météorologiques 601a, 601b, 601c et 601d qui correspondent au niveau de sévérité météorologique intermédiaire extrait des données météorologiques ; et la Fig. 6C montre des obstacles météorologiques 602a et 602b qui correspondent au niveau de sévérité météorologique fort extrait des données météorologiques.

Dans un mode de réalisation particulier, dans une étape 403, le serveur de données météorologiques WDS 201 applique des filtres morphologiques sur chacune des images séparées. Ces filtres morphologiques sont une combinaison d'une opération de dilatation des obstacles météorologiques (par niveau de sévérité météorologique) suivie d'une opération d'érosion des obstacles météorologiques (par niveau de sévérité météorologique) dilatés. Selon une mode de réalisation, un taux de dilatation prédéterminé et un taux d'érosion prédéterminé, par exemple identiques, sont respectivement appliqués. Ces filtres morphologiques permettent de simplifier, de manière plus ou moins conservatrice, les obstacles météorologiques obtenus pour chaque niveau de sévérité météorologique. Un exemple d'application de tels filtres morphologiques sur les obstacles météorologiques 601a, 601b, 601c et 601d de la Fig. 6B est illustré sur la Fig. 7. Ainsi, des obstacles météorologiques 700a, 700b, 700c et 700d sont obtenus, avec des contours simplifiés, à partir respectivement des obstacles météorologiques 601a, 601b, 601c et 601d.

Le serveur de données météorologiques WDS 201 applique une détection de contour sur les images séparées afin de déterminer les contours des obstacles représentés, comme illustré par les contours 800a, 800b, 800c et 800d sur la Fig. 8 obtenus à partir respectivement des obstacles météorologiques 700a, 700b, 700c et 700d de la Fig. 7. La détection de contour peut en variante être appliquée avant l'application des filtres morphologiques.

Dans un mode de réalisation particulier, le serveur de données météorologiques WDS 201 applique un autre filtre visant à supprimer, par niveau de sévérité météorologique, les obstacles météorologiques ayant une surface inférieure à un seuil de surface prédéterminé. Cet autre filtre peut être appliqué avec des seuils différents en fonction du niveau de sévérité météorologique considéré. Par exemple, plus le niveau de sévérité météorologique est élevé, plus cet autre filtre est conservateur. Un exemple de résultat obtenu avec cet autre filtre est illustré sur la Fig. 9 où, à partir des contours 800a, 800b, 800c et 800d de la Fig. 8, seuls les contours 800a, 800b, 800c subsistent. A noter que la détection de contour peut, dans une autre variante, être appliquée après l'application de cet autre filtre visant à supprimer les obstacles météorologiques ayant une surface inférieure au seuil de surface prédéterminé.

Dans une étape 404, le serveur de données météorologiques WDS 201 effectue une polygonisation des contours des obstacles météorologiques obtenus après application des filtres (si des filtres tels que mentionnés ci-dessus ont été appliqués). La polygonisation est une opération de simplification de contour, avec une distance maximale ε > 0 qui est prédéterminée. La polygonisation est effectuée pour chaque niveau de sévérité météorologique.

La distance maximale ε définit la marge d'erreur maximale autorisée entre le contour de chaque obstacle météorologique avant polygonisation et le contour de chaque obstacle météorologique après polygonisation. La distance maximale ε peut être établie à différentes valeurs selon si les polygones d'obstacles météorologiques sont destinés à être fournis au système de gestion de vol FMS 202 ou à l'afficheur DISP 204. Lorsque les polygones d'obstacles météorologiques sont destinés à être fournis au système de gestion de vol FMS 202, le système de gestion de vol FMS 202 peut fournir un paramètre de calibration permettant d'établir la distance maximale ε.

Un algorithme de Douglas-Peucker, aussi connu sous le nom d'algorithme de Ramer-Douglas-Peucker, est par exemple utilisé pour réaliser la polygonisation, avec une distance maximale ε > 0 qui est prédéterminée. D'autres algorithmes de simplification de contours peuvent être utilisés.

Dans un mode de réalisation particulier, le serveur de données météorologiques WDS 201 vérifie s'il résulte de l'étape 404 qu'un ou plusieurs polygones ainsi obtenus est composé de moins de trois arêtes (polygones limités à un segment de droite). Si tel est le cas, le serveur de données météorologiques WDS 201 supprime le ou les polygones en question.

Puis, le serveur de données météorologiques WDS 201 effectue un géoréférencement des polygones ainsi obtenus. En d'autres termes, le serveur de données météorologiques WDS 201 attribue des coordonnées spatiales aux sommets des arêtes constituant les polygones obtenus. Ce géoréférencement des polygones est réalisé à partir du géoréférencement des données météorologiques utilisées pour générer lesdits polygones et d'une connaissance des transformations géométriques dans les images en 2 dimensions pour parvenir auxdits polygones.

Le serveur de données météorologiques WDS 201 peut rassembler les polygones, qui sont ainsi obtenus par niveau de sévérité météorologique, par obstacle météorologique, comme illustré sur la Fig. 11A.

Dans une étape 405, le serveur de données météorologiques WDS 201 fournit les descripteurs d'obstacles météorologiques, décrivant les polygones ainsi obtenus et leur géoréférencement, et potentiellement d'autres polygones d'obstacles météorologiques venant du centre informatique d'une compagnie aérienne (éventuellement via la sacoche électronique de vol EFB), au système de gestion de vol FMS 202. Le serveur de données météorologiques WDS 201 peut aussi fournir les polygones ainsi obtenus, et potentiellement d'autres polygones d'obstacles météorologiques venant du centre informatique d'une compagnie aérienne (éventuellement via la sacoche électronique de vol EFB), à l'afficheur DISP 204.

Dans un mode de réalisation particulier, le serveur de données météorologiques WDS 201 fournit aussi les descripteurs de polygones ainsi obtenus, au centre informatique de la compagnie aérienne (par le biais du transmetteur-récepteur TX/RX 205) afin qu'ils puissent être partagés avec un ou plusieurs autres aéronefs.

La Fig. 4A illustre schématiquement un algorithme de fourniture des obstacles météorologiques sous forme de polygones dans un contexte à 2 dimensions (2D). Une approche à 3 dimensions (3D) est schématiquement illustrée sur la Fig. 4B, dans un deuxième mode de réalisation.

Dans une étape 411, le serveur de données météorologiques WDS 201 obtient des données géoréférencées d'obstacles météorologiques en 3 dimensions (3D) spatiales. Par exemple, le serveur de données météorologiques WDS 201 obtient des données géoréférencées d'obstacles météorologiques résultant d'échos d'un radar météorologique embarqué dans l'aéronef 100 et éventuellement d'autres capteurs de l'aéronef 100. Par exemple, ces données géoréférencées prennent une forme d'une ou plusieurs matrices à 3 dimensions spatiales, où chaque point indique une valeur de réflectivité et éventuellement une valeur de vélocité Doppler.

Dans une étape 412, le serveur de données météorologiques WDS 201 effectue une extraction des données géoréférencées en couches d'altitude afin d'obtenir des données météorologiques en 2 dimensions (2D). Chaque couche d'altitude peut ainsi être traitée indépendamment pour réaliser la polygonisation (on retombe ainsi dans le contexte de la Fig. 4A, pour chaque couche d'altitude).

Dans l'exemple précédent de matrices à 3 dimensions spatiales résultant d'échos d'un radar météorologique embarqué dans l'aéronef 100, il est possible que la résolution de la matrice diffère de la découpe en couches d'altitude et qu'ainsi une même couche d'altitude couvre plusieurs valeurs d'index d'une dimension desdites matrices. Dans ce cas, la valeur de réflectivité la plus élevée est conservée (de même pour la valeur de vélocité Doppler).

Dans une étape 413, le serveur de données météorologiques WDS 201 traite de manière séparée les données météorologiques selon leur niveau de sévérité météorologique (images séparées), par couche d'altitude. Le traitement est ainsi appliqué indépendamment pour chaque couche d'altitude. Pour chaque couche d'altitude, l'étape 413 est identique à l'étape 402 déjà décrite ci-dessus.

Dans une étape 414, le serveur de données météorologiques WDS 201 applique des filtres morphologiques sur chacune des images séparées. Pour chaque couche d'altitude, l'étape 414 est identique à l'étape 403 déjà décrite ci-dessus.

Dans une étape 415, le serveur de données météorologiques WDS 201 effectue une polygonisation des contours des obstacles météorologiques obtenus après application des filtres (si des filtres tels que mentionnés ci-dessus ont été appliqués). La polygonisation est effectuée pour chaque niveau de sévérité météorologique et pour chaque couche d'altitude. Ainsi, pour chaque couche d'altitude, l'étape 415 est identique à l'étape 404 déjà décrite ci-dessus.

Dans une étape 416, le serveur de données météorologiques WDS 201 effectue une reconstitution en 3 dimensions des obstacles météorologiques mis sous forme de polygones par couche d'altitude. Le serveur de données météorologiques WDS 201 effectue un géoréférencement des polygones ainsi obtenus, ce qui permet la reconstitution en 3 dimensions des obstacles météorologiques.

Le serveur de données météorologiques WDS 201 peut alors rassembler les polygones, qui sont ainsi obtenus par niveau de sévérité météorologique et par couche d'altitude, par obstacle météorologique, comme illustré sur la Fig. 11B (en coupe verticale) et sur la Fig. 11A (en coupe horizontale).

Dans une étape 417, le serveur de données météorologiques WDS 201 fournit les descripteurs d'obstacles météorologiques, décrivant les polygones ainsi obtenus et leur géoréférencement, et potentiellement d'autres polygones d'obstacles météorologiques venant du centre informatique d'une compagnie aérienne (éventuellement via la sacoche électronique de vol EFB), au système de gestion de vol FMS 202. Le serveur de données météorologiques WDS 201 peut aussi fournir les polygones ainsi obtenus, et potentiellement d'autres polygones d'obstacles météorologiques venant du centre informatique d'une compagnie aérienne (éventuellement via la sacoche électronique de vol EFB), à l'afficheur DISP 204.

Dans un mode de réalisation particulier, le serveur de données météorologiques WDS 201 fournit aussi les descripteurs de polygones ainsi obtenus, au centre informatique de la compagnie aérienne afin qu'ils puissent être partagés avec un ou plusieurs autres aéronefs.

Selon un mode de réalisation particulier, au cours d'une étape 4011 présentée en lien avec la Fig. 4A ou d'une étape 4121 présentée en lien avec la Fig. 4B, le serveur de données météorologiques WDS 201 reçoit du système de gestion de vol FMS 202 au moins un paramètre, dit « paramètre de besoin », représentatif d'un besoin du système de gestion de vol FMS 202.

Le serveur de données météorologiques WDS 201 configure alors le traitement des données d'obstacle météorologique et/ou la polygonisation en fonction du ou des paramètres de besoin obtenus. Pour cela, le serveur de données météorologiques WDS 201 adapte alors en fonction dudit au moins un paramètre de besoin, les paramètres de taux de dilatation, de taux d'érosion, de seuil de surface et/ou de distance maximale ε. En particulier, le serveur de données météorologiques WDS 201 augmente ou diminue une valeur du taux de dilatation, de taux d'érosion, de seuil de surface et/ou de distance maximale ε par rapport à une valeur par défaut de chacun de ces paramètres ou par rapport à une valeur précédente de chacun de ces paramètres.

Selon un mode de réalisation particulier, le serveur de données météorologiques WDS 201 adapte un ratio du taux de dilatation et de taux d'érosion des filtres morphologiques en fonction du ou des paramètres de besoin transmis par le système de gestion de vol FMS 202.

Le paramètre de besoin est représentatif de l'un ou l'autre des besoins suivants :
- besoin en sécurité du vol de l'aéronef 100. Dans un exemple, le système de gestion de vol FMS 202 calcule et sélectionne des trajectoires candidates pour lesquelles la sécurité du vol est prioritaire par rapport à un autre besoin, tel que le confort des passagers. Autrement dit, les trajectoires candidates évitent les polygones de niveau de sévérité météorologique les plus hauts, mais passent à travers les polygones de niveau de sévérité météorologique intermédiaire, même si cela engendre de l'inconfort pour les passagers (e.g., turbulences). Pour cela, le serveur de données météorologiques WDS 201, lors du traitement des données des obstacles météorologiques, applique des filtres morphologiques dont le ratio taux de dilatation/taux d'érosion est supérieur à une valeur par défaut (typiquement, valeur nominale). En d'autres termes, le serveur de données météorologiques WDS 201 favorise les opérations de dilatation (i.e., avec un taux de dilatation supérieur au taux d'érosion) en fonction du niveau de sévérité des polygones,
- capacité en ressources de calcul et/ou de mémoire du système de gestion de vol FMS 202. Dans un exemple, en fonction de la capacité de stockage du système de gestion de vol FMS 202, le serveur de données météorologiques WDS 201 adapte les paramètres de seuil de surface du traitement des données des obstacles météorologiques et/ou de distance maximale ε pendant la polygonisation, afin de ne pas surcharger la mémoire du système de gestion de vol FMS 202 ou afin de ne pas trop augmenter les temps de calcul. En particulier, le serveur de données météorologiques WDS 201 augmente la valeur du seuil de surface et/ou de distance maximale ε par rapport à des valeurs par défaut (typiquement, valeurs nominales) afin de diminuer le nombre de polygones et/ou le nombre de côtés des polygones,
- besoin en confort des passagers ou de la cargaison. Par exemple, le système de gestion de vol FMS 202 calcule et sélectionne des trajectoires candidates pour lesquelles le confort des passagers est prioritaire par rapport à un besoin en consommation de carburant. Pour cela, les trajectoires candidates évitent tous les polygones pour limiter, par exemple, la rencontre de turbulences. Pour cela, le serveur de données météorologiques WDS 201, lors du traitement des données des obstacles météorologiques, applique des filtres morphologiques dont le ratio taux de dilatation/taux d'érosion est supérieur à une valeur par défaut (i.e., favorise les opérations de dilation). En outre, le ratio taux de dilatation/taux d'érosion pour un besoin de confort prioritaire est supérieur au ratio taux de dilatation/taux d'érosion prédéfini pour un besoin d'économie de consommation de carburant,
- besoin en économie de temps de trajet, ou temps de vol entre la position courante au moment du calcul et de la sélection de trajectoires candidates par le système de gestion de vol FMS 202 et la destination de l'aéronef 100. Par exemple, le système de gestion de vols FMS 202 calcule et sélectionne des trajectoires candidates pour lesquelles le temps de trajet est le plus court possible. Pour cela, les trajectoires candidates évitent uniquement les polygones strictement nécessaires (e.g., avec un niveau de sévérité élevé) afin de limiter le temps de trajet. Pour cela, le serveur de données météorologiques WDS 201 adapte le ratio taux de dilatation/taux d'érosion pour favoriser les opérations d'érosion (i.e., taux d'érosion supérieur au taux de dilatation). Autrement dit, le serveur de données météorologiques WDS 201 diminue le ratio taux de dilatation/taux d'érosion par rapport à une valeur par défaut (typiquement, valeur nominale). En outre, le serveur de données météorologiques WDS 201 augmente le seuil de surface par rapport à une valeur par défaut (typiquement, valeur nominale), et diminue la distance maximale ε par rapport à une valeur par défaut (typiquement, valeur nominale),
- besoin en consommation de carburant et impact environnemental. Par exemple, le système de gestion de vol FMS 202 cherche à limiter les émissions de CO2, NOx, trainées de condensation, etc. Alternativement ou additionnellement, le système de gestion de vol FMS 202 cherche à économiser le carburant dont dispose l'aéronef 100. Les trajectoires calculées, puis sélectionnées sont les plus courtes possibles et évitent donc certains polygones, mais en traversent d'autres pour économiser du carburant. Pour cela, le serveur de données météorologiques WDS 201 diminue le paramètre de distance maximale ε par rapport à une valeur par défaut (i.e., obtention de polygone plus précis).

Afin de pouvoir effectuer les différentes adaptations (i.e., augmentation ou diminution par rapport à des valeurs par défaut ou des valeurs précédentes) des paramètres ci-dessus, le serveur de données météorologiques WDS 201 reçoit l'un ou une combinaison des paramètres de besoin représentatifs des besoins décrits ci-dessus. Il est ainsi possible pour le serveur de données météorologiques WDS 201 de configurer le traitement des données d'obstacles météorologiques et/ou la polygonisation des obstacles météorologiques afin que le système de gestion de vol FMS 202 puisse calculer et sélectionner des trajectoires candidates en adéquation avec le ou les besoins en question.

Ces besoins du système de gestion de vol FMS peuvent être prédéfinis par des besoins (ou objectifs) de la compagnie aérienne gérant l'aéronef 100, puis adaptés lors du vol en fonction des différentes conditions du moment.

Selon un mode de réalisation particulier, le paramètre de besoin correspond au paramètre de calibration fourni par le système de gestion de vol FMS 202 et permettant d'établir la distance maximale ε. Autrement dit, le paramètre de calibration est représentatif de l'un ou l'autre des besoins décrits ci-dessus.

## Revendications

1. Procédé de fourniture de descripteurs d'obstacles météorologiques par un serveur de données météorologiques (201), le serveur de données météorologiques (201) étant embarqué dans un aéronef (100), le serveur de données météorologiques (201) comportant de la circuiterie électronique implémentant les étapes suivantes :
- obtention (401, 411) de données géoréférencées des obstacles météorologiques ;
- traitement (402, 413) des données géoréférencées des obstacles météorologiques afin de réaliser une discrimination de sévérité météorologique des obstacles météorologiques et obtenir des images en deux dimensions des obstacles météorologiques qui sont séparées par niveau de sévérité météorologique ;
- polygonisation (404, 415) par simplification de contour des obstacles météorologiques des images en deux dimensions, pour chaque niveau de sévérité météorologique, afin d'obtenir des polygones représentatifs des obstacles météorologiques, et géoréférencement des polygones obtenus ; et
- fourniture (405, 417) des descripteurs d'obstacles météorologiques à un système de gestion de vol (202) de l'aéronef, les descripteurs décrivant les polygones obtenus avec leur géoréférencement ;
**caractérisé en ce que** ledit procédé comporte en outre les étapes suivantes :
- réception d'au moins un paramètre de besoin transmis par le système de gestion de vol (202), ledit paramètre de besoin étant représentatif d'un besoin du système de gestion de vol (202) ; et
- configuration de ladite polygonisation (404, 4015) et/ou dudit traitement (402, 413) des données en fonction dudit au moins un paramètre de besoin.

2. Procédé selon la revendication 1, dans lequel les données géoréférencées des obstacles météorologiques sont traitées (413) indépendamment en 2 dimensions par couche d'altitude, et le procédé comportant en outre l'étape suivante :
- reconstitution (416) en 3 dimensions des obstacles météorologiques mis sous forme de polygones par couche d'altitude.

3. Procédé selon la revendication 1 ou 2, comportant en outre l'étape suivante :
- application (403, 414) de filtres morphologiques sur les images séparées par niveau de sévérité météorologique, les filtres morphologiques étant une combinaison d'une opération de dilatation suivie d'une opération d'érosion.

4. Procédé selon la revendication 3, comportant en outre l'étape suivante :
- adaptation d'un ratio d'un taux de dilatation représentatif de l'opération de dilatation et d'un taux d'érosion représentatif de l'opération d'érosion, en fonction dudit au moins un paramètre de besoin.

5. Procédé selon la revendication 4, dans lequel l'adaptation du ratio du taux de dilatation et du taux d'érosion correspond à au moins l'une parmi :
- une augmentation par rapport à une valeur par défaut dudit ratio lorsque ledit au moins un paramètre de besoin est représentatif d'un besoin du système de gestion de vol (202) correspondant à un besoin de sécurité d'un vol du l'aéronef (100) ou à un besoin de confort des passagers de l'aéronef (100),
- une diminution par rapport à une valeur par défaut dudit ratio lorsque ledit au moins un paramètre de besoin est représentatif d'un besoin du système de gestion de vol (202) correspondant à un besoin de diminution d'un temps de trajet.

6. Procédé selon l'une quelconque des revendications 3 à 5, comportant en outre l'étape suivante :
- application d'un autre filtre visant à supprimer, par niveau de sévérité météorologique, les obstacles météorologiques ayant une surface inférieure à un seuil de surface.

7. Procédé selon la revendication 6, comportant en outre l'étape suivante :
- adaptation d'une valeur du seuil de surface en fonction dudit au moins un paramètre de besoin.

8. Procédé selon la revendication 7, dans lequel l'adaptation de ladite valeur du seuil de surface correspond à une augmentation par rapport à une valeur par défaut dudit seuil de surface lorsque ledit au moins un paramètre de besoin est représentatif d'un besoin du système de gestion de vol (202) correspondant à une capacité en ressources de calcul et/ou en mémoire du système de gestion de vol (202) ou à la diminution du temps de trajet.

9. Procédé selon l'une quelconque des revendications 6 à 8, dans lequel :
- au moins un niveau de sévérité météorologique correspond à un impact relatif à la sécurité de l'aéronef (100), et/ou
- au moins un niveau de sévérité météorologique correspond à un impact relatif aux performances de l'aéronef (100).

10. Procédé selon l'une quelconque des revendications 1 à 9, dans lequel la polygonisation est réalisée en utilisant une distance maximale dépendante d'un paramètre de calibrage correspondant à un desdits au moins un paramètre de besoin.

11. Procédé selon la revendication 10, comportant en outre l'étape suivante :
- augmentation par rapport à une valeur par défaut de ladite distance maximale, lorsque ledit au moins un paramètre de besoin est représentatif d'un besoin du système de gestion de vol correspondant à la capacité en ressource de calcul et/ou de mémoire du système de gestion de vol,
- diminution par rapport à une valeur par défaut de ladite distance maximale, lorsque ledit au moins un paramètre de besoin est représentatif d'un besoin du système de gestion de vol correspondant à la diminution du temps de trajet ou à une réduction d'une consommation de carburant et d'un impact environnemental.

12. Procédé selon l'une quelconque des revendications 1 à 11, comportant en outre l'étape suivante :
- fourniture des descripteurs d'obstacles météorologiques à un afficheur (204) de l'aéronef (100).

13. Serveur de données météorologiques (201) destiné à être embarqué dans un aéronef (100), le serveur de données météorologiques (201) comportant de la circuiterie électronique configurée pour implémenter les étapes suivantes :
- obtention (401, 411) de données géoréférencées des obstacles météorologiques ;
- traitement (402, 413) des données géoréférencées des obstacles météorologiques afin de réaliser une discrimination de sévérité météorologique des obstacles météorologiques et obtenir des images en deux dimensions des obstacles météorologiques qui sont séparées par niveau de sévérité météorologique ;
- polygonisation (404, 415) par simplification de contour des obstacles météorologiques des images en deux dimensions, pour chaque niveau de sévérité météorologique, afin d'obtenir des polygones représentatifs des obstacles météorologiques, et géoréférencement des polygones obtenus ; et
- fourniture (405, 417) de descripteurs d'obstacles météorologiques, les descripteurs décrivant les polygones obtenus avec leur géoréférencement
**caractérisé en ce que** la circuiterie électronique est en outre configurée pour implémenter les étapes suivantes :
- réception d'au moins un paramètre de besoin transmis par le système de gestion de vol (202), ledit au moins un paramètre de besoin étant représentatif d'un besoin du système de gestion de vol (202) ; et
- configuration de ladite polygonisation (404, 4015) et/ou dudit traitement (402, 413) des données en fonction dudit au moins un paramètre de besoin.

14. Aéronef (100) comportant un système de gestion de vol (202) et le serveur de données météorologiques (201) selon la revendication 13 configuré pour fournir les descripteurs d'obstacles météorologiques au système de gestion de vol (202), de sorte que le système de gestion de vol (202) est apte à calculer des trajectoires d'évitement des obstacles météorologiques grâce auxdits descripteurs d'obstacles météorologiques.
